# FASCICULE DE BREVET EUROPEEN

(11) **EP 1 539 461 B1**
(45) Date de publication et mention de la délivrance du brevet: **21.02.2007**
(21) Numéro de dépôt: 03763947.3
(22) Date de dépôt: 09.07.2003
(51) Int. Cl.: B29C 51/42, B29C 51/26

(54) **INSTALLATION POUR FABRIQUER DES OBJETS PAR THERMOFORMAGE A PARTIR DE PASTILLES DE MATERIAU THERMOPLASTIQUE**
ANLAGE ZUR HERSTELLUNG VON OBJEKTEN DURCH WÄRMEFORMEN VON KÜGELCHEN AUS THERMOPLASTISCHEM MATERIAL
INSTALLATION FOR PRODUCING OBJECTS BY THERMOFORMING PELLETS OF THERMOPLASTIC MATERIAL

(30) Priorité: 09.07.2002 FR 0208623
(43) Date de publication de la demande: 15.06.2005
(73) Titulaire: ERCA FORMSEAL, 91940 Les Ulis (FR)
(72) Inventeur: SCHWAB, Dominique, F-78000 Versailles (FR); COOPER, Timothy, F-94240 L'Haye les Roses (FR)
(74) Mandataire: Intes, Didier Gérard André
(86) Numéro de dépôt international: PCT/FR2003/002150
(87) Numéro de publication internationale: WO 2004/007177

(56) Documents cités:
- EP-A- 0 972 627
- EP-A- 1 066 950
- WO-A-01/81069
- FR-A- 2 766 123
- US-A- 3 964 237
- US-A- 4 404 162

## Description

La présente invention concerne une installation pour fabriquer des objets tels que des récipients par thermoformage à partir de pastilles de matériau thermoplastique, comprenant des moyens de transport des pastilles au travers des différentes stations de l'installation, ces stations comprenant une station de chauffage desdites pastilles qui comporte des moyens de chauffage inférieurs et des moyens de chauffage supérieurs, et une station de thermoformage pour déformer plastiquement par étirement les pastilles chauffées.

On connaît une installation de ce type par le brevet français n° 2 766 123 qui expose les avantages liés à l'utilisation, pour thermoformer des objets tels que des récipients, de pastilles de matériau thermoplastique plutôt que d'une bande continue, ces avantages ayant trait, en particulier, au fait que les déchets sont évités ou considérablement limités.

On peut même faire en sorte que les bords des pastilles définissent les bords des objets thermoformés, sans qu'il soit nécessaire, après le thermoformage, de réaliser une opération supplémentaire pour rectifier ces bords.

Toutefois, ceci implique généralement une déformation du bord des pastilles soit avant les opérations de thermoformage, soit au cours de ces opérations. Pour réaliser cette déformation de manière satisfaisante, il est souhaitable que l'intégralité de la surface des pastilles ait été portée à la température de thermoformage dans la station de chauffage.

Toutefois, dans FR 2 766 123, les pastilles sont portées dans la station de chauffage par des supports ayant des rebords sur lesquels reposent les bords des pastilles. Il en résulte que ces zones des pastilles supportées par les rebords ne peuvent pas être correctement chauffées, au moins en ce qui concerne le chauffage réalisé par les moyens de chauffe inférieurs.

L'invention a pour but d'améliorer encore cet état de la technique en permettant de mieux chauffer les pastilles.

Ce but est atteint grâce au fait que les moyens de transport comprennent des éléments de transport délimitant des cellules qui sont ouvertes vers le haut et vers le bas et qui sont chacune aptes à contenir une pastille en dégageant l'intégralité des faces supérieure et inférieure de la pastille, des moyens pour disposer les pastilles dans les cellules, des moyens d'entraînement pour entraîner les éléments de transport dans la station de chauffage entre les moyens de chauffage inférieurs et les moyens de chauffage supérieurs, et des moyens pour transférer les pastilles chauffées dans la station de thermoformage et au fait que les moyens de chauffage inférieurs coopèrent avec un support pour les pastilles lorsque les éléments de transport sont entraînés dans la station de chauffage.

Comme on le verra dans la suite, ce support peut par exemple être directement constitué par une plaque de chauffe inférieure ou bien être formé par un tapis en matériau conducteur de chaleur, qui transmet la chaleur produite par les moyens de chauffage inférieurs aux pastilles tout en étant entraîné en synchronisme avec les éléments de transport. Dans les deux cas, ce support est en contact thermique avec les moyens de chauffage inférieurs, par un transfert thermique ou parce qu'il est constitué par la surface d'une plaque de chauffe.

Les faces supérieure et inférieure des pastilles sont intégralement dégagées lorsque ces pastilles sont disposées dans les cellules, ce qui permet d'exposer l'intégralité de la face inférieure aux moyens de chauffage inférieurs et l'intégralité de la face supérieure aux moyens de chauffage supérieurs. Ces moyens de chauffage peuvent être constitués par une plaque de chauffe, ou bien par des moyens de chauffage par rayonnement.

En étant entraînés dans la station de chauffage, les éléments de transport poussent ou tirent les pastilles avec eux pour qu'elles soient également entraînées dans cette station, dans laquelle le support des pastilles leur transmet la chaleur produite par les moyens de chauffage inférieurs. Il en résulte un chauffage d'extrêmement bonne qualité de ces pastilles. De plus, les faces inférieures des pastilles peuvent reposer sur la surface du support non seulement lors d'une phase de stationnement de ces pastilles dans l'installation, mais également lors d'un pas d'avancement desdites pastilles, l'entraînement se faisant en général en mouvement pas-à-pas.

Selon un premier mode de réalisation, les moyens de chauffage inférieurs comprennent une plaque de chauffe inférieure et cette plaque constitue un support pour les pastilles lorsque les éléments de transport sont entraînés dans la station de chauffage.

Avantageusement, l'installation comporte une plaque de support froide, qui est disposée sur un côté de la plaque de chauffe inférieure, et dont la surface s'étend dans un même plan horizontal que la surface de ladite plaque de chauffe, cette dernière et la plaque de support froide étant mobiles latéralement entre une première position dans laquelle la plaque de chauffe inférieure est apte à supporter les pastilles et une deuxième position dans laquelle la plaque de support froide est apte à supporter les pastilles.

Lorsque l'installation est opérationnelle, les moyens de chauffage étant portés à température, il peut arriver que l'on doive momentanément l'arrêter, par exemple pour éliminer des pastilles défectueuses ou bien pour recharger en pastilles l'entrée de la machine. Selon la durée de ces stationnements, il peut être souhaitable d'éviter que les pastilles présentes dans la station de chauffage ne restent au contact de la plaque de chauffe inférieure qui risquerait de les chauffer excessivement et de les dégrader. Grâce aux dispositions citées ci-dessus, il suffit, lors d'une phase de stationnement, de déplacer latéralement la plaque de chauffe inférieure et la plaque de support froide pour que les pastilles soient supportées par cette dernière.

Lorsque les moyens de chauffage supérieurs sont des moyens de chauffage par rayonnement, il peut suffire, durant une phase de stationnement, de stopper l'alimentation de ces moyens de chauffage pour qu'ils cessent de chauffer les pastilles.

Toutefois, avantageusement, ces moyens de chauffage supérieurs sont également aptes à être déplacés latéralement avec la plaque de chauffage inférieure et la plaque de support froide pour éviter d'exposer les pastilles auxdits moyens de chauffage supérieurs lors d'un stationnement de l'installation.

Avantageusement, l'installation comporte, en outre, une plaque supérieure froide, qui est disposée au-dessus de la plaque de support froide et cette plaque, ainsi que les moyens de chauffage supérieurs, sont mobiles latéralement entre une première position dans laquelle les moyens de chauffage supérieurs sont situés au-dessus des pastilles et une deuxième position dans laquelle la plaque supérieure froide est située au-dessus des pastilles.

Cette plaque supérieure froide permet, lorsque les pastilles sont entre les deux plaques froides lors d'un stationnement de l'installation, non seulement d'éviter une montée en température de ces pastilles, mais également de les protéger contre d'éventuelles poussières.

Les plaques froides peuvent être réalisées en matériau isolant pour éviter la diffusion, dans ces plaques, de la chaleur produite par les moyens de chauffage. Elles peuvent éventuellement être réfrigérées.

Avantageusement, les moyens de chauffage supérieurs comprennent une plaque de chauffe supérieure présentant une surface inférieure apte à être en contact avec les faces supérieures des pastilles.

Ce contact favorise le chauffage des pastilles dont les deux faces, intégralement découvertes par les moyens de transport, sont en contact avec les moyens de chauffage inférieurs et supérieurs. La plaque de chauffe supérieure peut présenter des surfaces de chauffage en saillie qui, lors d'une phase de chauffage, pénètrent dans les cellules des éléments de transport pour venir en contact des faces supérieures des pastilles.

Toutefois, il est avantageux de doter cette plaque de chauffe supérieure d'une surface inférieure plane et de faire en sorte que les faces supérieures des pastilles dépassent au-delà des éléments de transport. La plaque de chauffe supérieure peut être déplaçable verticalement pour s'écarter légèrement des pastilles dans une phase d'entraînement.

Selon un second mode de réalisation, l'installation comporte un tapis inférieur en matériau conducteur de chaleur et des moyens pour transmettre à ce tapis la chaleur générée par les moyens de chauffage inférieurs. Le tapis constitue le support pour les pastilles qui reposent sur la face supérieure du tapis. Celui-ci est entraîné dans la station de chauffage en synchronisme avec les éléments de transport.

Avantageusement, l'installation comporte un tapis supérieur en matériau conducteur de chaleur et des moyens pour transmettre à ce tapis la chaleur générée par les moyens de chauffage supérieurs. La face inférieure de ce tapis est apte à être en contact avec les faces supérieures des pastilles et, par ailleurs, ce tapis est entraîné dans la station de chauffage en synchronisme avec les éléments de transport.

Avantageusement, les éléments de transport sont formés par des plaquettes de transport.

Ces plaquettes présentent avantageusement une épaisseur tout au plus sensiblement égale à l'épaisseur que présentent les pastilles avant leur thermoformage.

Ces plaquettes peuvent être maintenues très légèrement écartées de la surface de la plaque de chauffe inférieure (il suffit par exemple d'un écartement de quelques dixièmes de millimètres) et également très légèrement écartées de la surface de la plaque de chauffe supérieure lors d'une phase de chauffage.

Par exemple, l'installation étant réalisée pour fonctionner avec des pastilles d'épaisseur donnée, l'épaisseur des plaquettes de transport est inférieure à cette épaisseur donnée d'une valeur comprise entre quelques dixièmes de millimètres et 1 à 2 mm.

Avantageusement, chaque cellule est délimitée entre une plaquette de transport amont et une plaquette de transport aval disposées l'une à la suite de l'autre dans le sens de transport des pastilles.

Ainsi, avantageusement, le contour de chaque plaquette de transport présente un bord concave aval et un bord concave amont alignés selon le sens de transport des pastilles, le bord concave aval d'une première plaquette étant apte à définir une cellule avec le bord concave amont d'une deuxième plaquette disposée en aval de ladite première plaquette.

Ceci facilite la disposition des pastilles dans les cellules, une pastille pouvant être disposée entre les bords concaves en regard de deux plaquettes, avant que ces plaquettes ne soient disposées l'une contre l'autre pour refermer la cellule formée par ces deux bords concaves contre le bord de la plaquette.

Selon une autre variante, chaque plaquette peut être formée d'une seule pièce présentant des cellules entières.

L'invention sera bien comprise et ses avantages apparaîtront mieux à la lecture de la description détaillée qui suit, d'un mode de réalisation représenté à titre d'exemple non limitatif.

La description se réfère aux dessins annexés, sur lesquels :
- la figure 1 est une vue générale d'une installation conforme à l'installation selon un premier mode de réalisation de la station de chauffage;
- la figure 2 est une vue transversale à celle de la figure 1, montrant la station de chauffage ;
- la figure 3 illustre la cinématique de déplacement des plaquettes de transport dans l'installation ;
- les figures 4 et 5 sont des coupes verticales schématiques dans la station de thermoformage ;
- la figure 6 est une vue en perspective schématique de l'outil inférieur de la station de thermoformage ; et
- la figure 7 est une vue selon la flèche VII de la figure 6 ;
- la figure 8 est une vue générale d'une installation conforme à l'invention selon un deuxième mode de réalisation de la station de chauffage ;
- la figure 9 est une vue en perspective schématique de la partie amont de la station de thermoformage ;
- la figure 10a est une vue schématique dans un plan vertical de la plaque de chauffe inférieure, des tiges de support et du tapis inférieur lors d'un d'arrêt de l'installation ; et
- la figure 10b est une vue schématique dans un plan vertical de la plaque de chauffe inférieure, des tiges de support et du tapis inférieur lors du fonctionnement de l'installation.

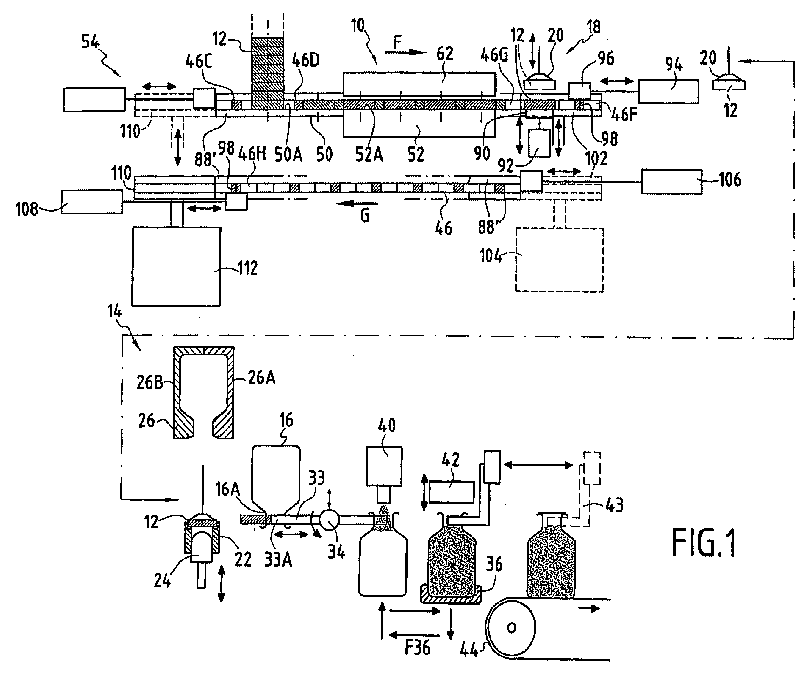

L'installation représentée sur la figure 1 comprend une station de chauffage 10 pour des pastilles 12 en matériau thermoplastique, des moyens pour entraîner les pastilles dans la station de chauffage jusqu'à la sortie de cette station et une station de thermoformage 14 dans laquelle les pastilles chaudes sont déformées plastiquement pour former des objets tels que des récipients 16.

Les pastilles chaudes sont transférées de la sortie de la station de chauffage à la station de thermoformage par des moyens de transfert 18. Ces moyens de transfert comprennent un organe de préhension, par exemple un bras à ventouse 20 apte à saisir les pastilles chaudes par aspiration sans pratiquement les refroidir, et à transporter ces pastilles jusqu'à la station de thermoformage. Par exemple, le bras à ventouse est commandé selon un cycle comprenant un déplacement vertical pour saisir les plaquettes et les lever par aspiration, puis un déplacement horizontal sur un chariot jusqu'à ce que le bras à ventouse parvienne au-dessus de l'outil inférieur 22 de la station de thermoformage 14, un abaissement dans cette station, et l'interruption de l'aspiration pour que la pastille soit disposée sur l'outil inférieur 22, puis un retour en position de départ.

En l'espèce, cet outil inférieur 22 est un contre-moule de thermoformage, dans lequel est déplaçable un piston de thermoformage 24 qui, lorsque le moule de thermoformage 26 est refermé contre le contre-moule, se déplace en translation pour déformer la pastille 12 et amener sa matière dans la chambre du moule 26, contre la paroi duquel il est plaqué par injection d'air. Dans l'exemple représenté, les récipients sont thermoformés vers le haut, le moule étant l'outil supérieur de la station de thermoformage. De plus, dans l'exemple représenté, les récipients thermoformés comprennent un col 16A qui forme une contre-dépouille, et le moule 26 comporte plusieurs parties, 26A et 26B qui peuvent être écartées l'une de l'autre pour permettre le démoulage.

A la sortie de la station de thermoformage, le récipient qui vient d'être thermoformé est saisi à l'aide de pinces 33A. Par exemple, ces pinces équipent l'extrémité libre d'un bras rétractable 33 qui est allongé pour saisir le récipient dans la station de thermoformage et rétracté pour l'en écarter.

Le bras 33 est monté sur un support pivotant 34, ce qui permet de retourner le récipient pour disposer son col vers le haut après son écartement de la station de thermoformage. Le récipient retourné, toujours porté par le bras 33, est disposé dans la station de remplissage 40. Il peut être pris en charge par un support inférieur 36 qui est déplacé selon les côtés d'un rectangle comme l'indiquent les flèches F36 pour se placer sous le récipient rempli, supporter ce dernier et l'amener par un déplacement horizontal dans une station 42 de pose et de scellage de couvercle ou de bouchonnage. Au sortir de cette station, le récipient est pris en charge par un nouveau bras 43 à pince, qui le place sur un convoyeur final 44 permettant son évacuation de l'installation et son conditionnement.

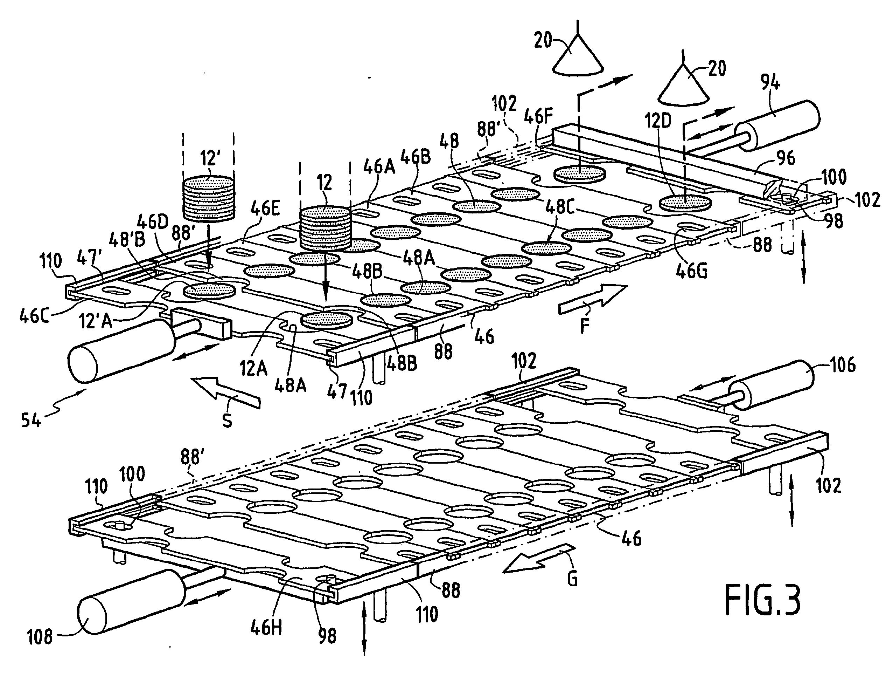

Comme on le comprend mieux sur la figure 3, les moyens de transport comprennent des éléments de transport constitués par des plaquettes de transport 46 qui délimitent des cellules 48 qui sont totalement ouvertes vers le haut et vers le bas. Une pastille 12 peut être disposée dans chaque cellule, sans être retenue ni vers le haut, ni vers le bas. Pour la clarté du dessin, les plaquettes de transport de la figure 1 sont représentées dans une coupe passant par un diamètre des cellules parallèle au sens d'avancement F.

En l'espèce, chaque cellule, telle la cellule 48C, est délimitée entre une plaquette de transport amont 46A et une plaquette de transport aval 46B disposées l'une à la suite de l'autre dans le sens F de transport des pastilles. Plus précisément, on voit que chaque plaquette de transport présente au moins un bord concave aval 48A et un bord concave amont 48B, respectivement disposés du côté aval et du côté amont de la plaquette dans le sens F.

On voit que, lorsque deux plaquettes successives sont disposées de telle sorte que le côté aval de la plaquette amont touche le côté amont de la plaquette aval, le bord concave aval de la plaquette amont et le bord concave amont de la plaquette aval sont disposés en regard l'un de l'autre de manière à définir, ensemble, une cellule fermée dans laquelle peut être disposée une pastille 12.

Ces bords forment alors une limite continue pour cette cellule, par exemple un cercle.

Dans l'exemple représenté, l'installation permet de thermoformer deux récipients à chaque étape de thermoformage. C'est pourquoi elle travaille à partir de deux piles de jetons 12 et 12' disposées l'une à côté de l'autre dans le sens transversal S de l'installation.

Bien entendu, elle pourrait travailler à partir de plus de deux piles de jetons pour thermoformer des récipients sur plus de deux rangées ou, au contraire, ne travailler qu'à partir d'une seule pile.

Dans toute la suite, on décrira le fonctionnement de l'installation en relation avec les éléments de cette dernière qui agissent sur les jetons de l'une des piles.

On voit ainsi sur la figure 1 que l'installation comprend une table d'entrée 50 dont la surface 50A s'étend dans le même plan horizontal que la surface 52A de la plaque de chauffe inférieure 52.

Les moyens de transport comprennent des moyens pour amener une plaquette de transport sur la table d'entrée dans une position d'attente dans laquelle le bord concave aval de cette plaquette se trouve en regard de la pile. La plaquette 46C des figures 1 et 3 se trouve dans cette position d'attente. Les moyens de transport comprennent également des moyens pour déplacer cette plaquette vers l'aval, dans le sens F, de telle sorte que le bord concave aval 48A de cette plaquette coopère avec la pastille 12 inférieure de la pile pour entraîner cette pastille vers l'aval, au moins jusqu'à ce que cette plaquette parvienne dans une position intermédiaire dans laquelle le bord concave amont de ladite plaquette se trouve devant la pile.

Sur la figure 3, la plaquette 46D est dans cette position intermédiaire. En effet, au pas précédent, elle occupait la position de la plaquette 46C et elle a été déplacée pour que son côté aval vienne contre le côté amont de la plaquette 46E disposée immédiatement à son aval. De même, on comprend que la plaquette 46C pourra être déplacée pour prendre en charge les pastilles inférieures 12A et 12'A des deux piles par ses deux bords concaves aval 48A et 48'A, avant de pousser ces pastilles contre les bords concaves amont 48B et 48'B de la plaquette 46D. Lorsque cette plaquette 46C aura atteint sa position intermédiaire, de nouvelles pastilles pourront venir au contact de la table d'entrée, et une nouvelle plaquette pourra occuper la position d'attente.

Les moyens d'entraînement comprennent avantageusement un organe d'entraînement se déplaçant en va-et-vient entre une première position dans laquelle il est apte à coopérer avec une plaquette en position d'attente et une deuxième position dans laquelle il place cette plaquette dans sa position intermédiaire. Dans l'exemple représenté, cet organe d'entraînement est formé par un vérin 54 qui, lorsqu'une plaquette est sur la table d'entrée, dans sa position d'attente, peut la pousser jusqu'à ce qu'elle vienne occuper sa position intermédiaire, et peut ensuite se rétracter pour attendre la venue d'une nouvelle plaquette en position d'attente. Lorsqu'une plaquette atteint sa position intermédiaire, elle pousse vers l'aval les plaquettes disposées devant elle. C'est de cette manière que s'effectue le transport en pas-à-pas dans l'installation des pastilles contenues dans les cellules délimitées entre les plaquettes.

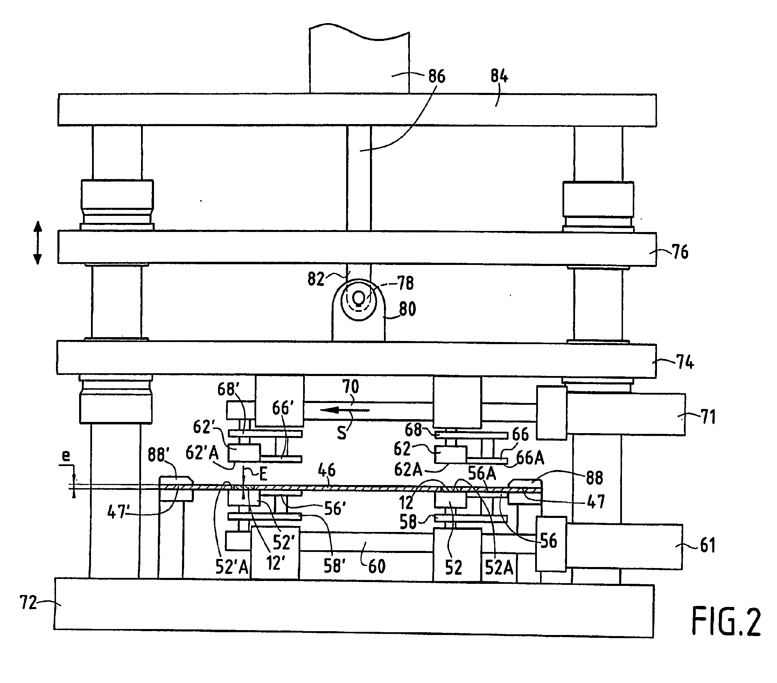

Les pastilles contenues dans les cellules délimitées entre les plaquettes sont supportées par la table d'entrée 50 jusqu'à ce qu'elles parviennent dans la station de chauffage 10. A partir de ce moment, les pastilles sont supportées par la surface de la plaque de chauffe 52. Sur la figure 2, on voit une plaquette 46 et deux pastilles, respectivement 12, 12', respectivement disposées sur les faces supérieures 52A et 52'A des deux plaques de chauffe inférieures 52 et 52'.

Les outils de chauffe permettent en effet de chauffer simultanément les pastilles issues des deux piles. Pour simplifier, on décrira seulement de manière détaillée les outils de chauffe situés sur la partie droite de la figure 2, sachant que ceux de la partie gauche sont identiques, et sont désignés par les mêmes références avec le signe '.

On voit ainsi que l'installation comporte une plaque de support froide 56 qui est disposée sur un côté de la plaque de chauffe inférieure 52. Sa surface supérieure 56A s'étend dans un même plan horizontal que la surface supérieure 52A de cette plaque de chauffe. Sur la figure 2, la plaque de chauffe inférieure 52 et la plaque de support froide 56 occupent leur première position dans laquelle la plaque de chauffe inférieure supporte la pastille 12. Lors d'un arrêt de l'installation, elles peuvent être déplacées ensembles latéralement dans le sens S, transversal au sens F, pour venir occuper une deuxième position dans laquelle c'est la plaque de support 56 qui supporte la pastille 12.

Dans l'exemple représenté, les plaques 52 et 56 sont portées par une même platine inférieure 58 par rapport à laquelle leurs positions peuvent être ajustées pour que leurs surfaces 52A et 56A soient rigoureusement dans la continuité l'une de l'autre. Cette platine est montée sur un chariot 60 qui peut être déplacé en va-et-vient grâce à un vérin 61, de telle sorte que les plaques 52 et 56 puissent occuper les première et deuxième position évoquées précédemment.

De leur côté, les plaques 52' et 56' sont montées sur une platine 58' qui est portée par le même chariot 60.

De même, les outils de chauffage de droite sur la figure 2 comprennent une plaque de chauffe supérieure 62 et une plaque supérieure froide 66 qui est disposée au-dessus de la plaque de support froide 56. Les plaques 62 et 66 peuvent être déplacées latéralement dans le sens S entre une première position, représentée sur la figure 2, dans laquelle la plaque de chauffe supérieure 62 est disposée au-dessus d'une pastille 12, et une deuxième position à laquelle la plaque supérieure froide est située au-dessus de cette pastille.

Les plaques 62 et 66 sont supportées par une même platine supérieure 68 qui est elle-même portée par un chariot 70 qui porte également la platine 68' qui supporte la plaque de chauffe supérieure 62' et la plaque supérieure froide 66' des outils de chauffage de gauche sur la figure 2. Le chariot 70 peut être déplacé en va-et-vient par un vérin 71.

Le chariot inférieur 60 est porté par une embase 72, tandis que le chariot supérieur 70 est porté par une poutre ou une plaque de portage 74. Cette plaque est elle-même supportée par rapport à une poutre ou à une plaque de support de référence 76 par rapport à laquelle elle peut être légèrement déplacée verticalement. Ce déplacement est par exemple opéré par l'entraînement en rotation d'un arbre excentrique 78 (par exemple à l'aide d'un vérin rotatif non représenté) dont l'excentrique est porté par un palier 80 solidaire de la plaque 74, et dont la partie à symétrie de révolution autour de son axe de rotation est portée par un palier 82 solidaire de la plaque 76. Ce déplacement vertical de la plaque 74 permet de déplacer verticalement la ou les plaques de chauffe supérieures. Elles peuvent ainsi être légèrement écartées des faces supérieures des pastilles lors d'un pas d'avancement de ces dernières, puis être déplacées vers le bas pour que leurs surfaces inférieures, respectivement 62A et 62'A viennent au contact des faces supérieures des pastilles. Les plaques supérieures froides sont évidemment déplacées en même temps.

La plaque de support de référence 76 est elle-même supportée par une plaque fixe 84 et, par un vérin 86, elle peut être déplacée verticalement pour écarter largement les plaques de chauffe supérieures des plaques inférieures en vue d'opérer une maintenance de la machine.

La surface inférieure 66A de la plaque supérieure froide peut être disposée dans un même plan horizontal que la surface inférieure 62A de la plaque de chauffe supérieure.

Pour la clarté du dessin, les plaques 62 et 66 semblent éloignées de la pastille 12 sur la figure 2. En réalité, lors du chauffage, la surface inférieure 62A de la plaque 62 est au contact de cette pastille et elle en est écartée faiblement lors d'une phase d'avancement des pastilles. La surface inférieure 66A de la plaque 66 peut être au contact de la pastille ou en être faiblement écartée lors d'un arrêt de l'installation.

L'épaisseur e d'une plaquette de transport 46 est avantageusement légèrement inférieure à l'épaisseur E d'une pastille avant son thermoformage. Ceci permet de faire en sorte que les deux faces des pastilles touchent les surfaces en regard des plaques de chauffe, sans que les plaquettes ne touchent ces surfaces.

Comme on le voit sur la figure 2, l'installation comporte des rails longitudinaux 88 et 88', qui sont aptes à coopérer avec les extrémités latérales 47 et 47' des plaquettes lors de l'entraînement de ces dernières.

Avantageusement, ces rails sont aptes à supporter les plaquettes en maintenant ces dernières hors de contact avec les plaques de chauffe. Les plaques de chauffe inférieures étant fixes, les rails sont réglés de telle sorte qu'ils supportent les plaquettes pour que leurs faces inférieures soient très légèrement au-dessus des surfaces des plaques de chauffe inférieures, par exemple sur une distance de l'ordre de quelques dixièmes de millimètres. La différence d'épaisseur entre les plaquettes et les pastilles permet également que, même dans la position basse de la plaque de chauffe supérieure, les plaquettes ne soient pas au contact de la surface inférieure de cette plaque.

Les rails s'étendent sur toute la longueur du trajet des plaquettes depuis la table d'entrée, jusqu'à la sortie de la station de chauffage.

Les plaquettes, par exemple réalisées en métal ou en matériau composite, sont suffisamment rigides pour pouvoir être supportées seulement par leurs extrémités latérales.

Sur les figures 1 et 3, on a désigné par la référence 46F la plaquette qui est la dernière, la plus en aval, sur le trajet de transport des pastilles. Cette plaquette 46F se trouve légèrement au-delà de la sortie de la station de chauffage. La pastille 12D sur le point d'être saisie par les moyens de préhension pourra être disposée dans la station de thermoformage et se trouve entre cette plaquette 46F et la plaquette de transport 46G immédiatement située à son amont.

L'organe de préhension constitué par exemple par une ventouse 20 est prêt à saisir la pastille 12 qui se trouve entre ces deux plaquettes. L'installation comporte des moyens pour écarter la plaquette de transport aval 46F de la plaquette de transport amont 46G avant que cet organe ne saisisse cette pastille. On voit en effet que la plaquette 46F est décollée de la plaquette 46G, c'est-à-dire que la cellule qu'elle forme avec cette plaquette pour la pastille 12 s'est ouverte. A cet instant, la pastille 12 est supportée par un support 90. Du fait de son chauffage, il peut arriver que la périphérie de la pastille 12 ait tendance à légèrement adhérer au bord concave des plaquettes. L'opération consistant à écarter la plaquette 46F de la plaquette 46G tend à décoller cette pastille 12 des bords concaves en regard de ces deux plaquettes, ce qui favorise la préhension de cette pastille par l'organe de préhension 20.

Avantageusement, l'installation comporte des moyens pour déplacer verticalement la pastille 12 située entre les plaquettes 46F et 46G, vers l'organe de préhension 20. Par exemple, si, comme sur les dessins, l'organe de préhension 20 est situé au-dessus des pastilles, le support 90 qui porte la pastille 20 à sa sortie de la station de chauffage peut être la tête du piston d'un vérin 92 qui est déplaçable verticalement sur une course très faible. Après l'écartement de la plaquette 46F, le piston peut être déplacé vers le haut pour favoriser encore le décollement de la pastille et faciliter sa préhension par l'organe 20.

Les moyens qui permettent d'écarter la plaquette 46F de la plaquette 46G comprennent en l'espèce un vérin d'écartement 94 qui saisit la plaquette 46F et l'écarte de la plaquette 46G.

Par exemple, la tête de ce vérin 94 est formée par une barre transversale 96 apte à venir se placer au-dessus de la plaquette 46F alors que celle-ci encore disposée contre la plaquette 46G est encore supportée par les rails 88 et 88'. Cette tête 96 porte des cliquets 98 qui s'effacent lorsqu'elle avance sur la plaque 46F et qui s'abaissent naturellement, étant repoussés par un ressort, dans des perçages 100 que présente la plaquette. Lorsque la tête 96 se déplace dans le sens de la flèche F, la plaquette est ainsi entraînée avec elle.

La plaquette 46F est ainsi disposée sur un support 102 formant un ascenseur. Sur la figure 1, ce support est représenté en trait plein dans sa position haute, et en trait interrompu dans sa position basse.

Le support 102 présente deux parties de support formées par des tronçons de rails qui, dans sa position haute, viennent respectivement dans le prolongement de chacun des rails supérieurs 88 et 88' précédemment évoqués et qui, dans la position basse du support, viennent dans le prolongement de rails inférieurs 88 et 88' analogues aux rails supérieurs.

Quand le support 102 atteint sa position basse, la plaquette 46F, dont les perçages 100 ont naturellement échappé aux cliquets 98, peut être poussée par la tête d'un vérin 106 dans le sens G opposé au sens F de manière à être engagée dans les rails inférieurs 88 et 88'.

Ainsi, en poussant successivement les plaquettes 46 amenées en position basse par le support 102, le vérin 106 fait avancer les plaquettes en pas à pas sur leur trajet de retour ver l'arrière, dans le sens G.

Lorsqu'une plaquette 46H parvient à l'issue de son trajet de retour, sous la table d'entrée 50, elle peut être séparée des autres plaquettes portées par les rails inférieurs 88 et 88' par la tête d'un vérin 108 analogue au vérin 94 et présentant comme lui, des cliquets 98. Par l'actionnement du vérin 108, cette tête peut s'avancer sous la plaquette 46H et ses cliquets s'effacent jusqu'à ce qu'ils parviennent dans les perçages 100, dans lesquels ils se redressent élastiquement. La tête du vérin 108 peut alors reculer dans le sens G en entraînant avec elle la plaquette 46H qu'elle dispose sur le support 110 formant ascenseur, ce support occupant sa position basse (en trait plein sur la figure 1) dans laquelle ses deux parties de support formées par des tronçons de rails sont dans le prolongement des rails inférieurs 88 et 88', à l'arrière de ces derniers.

Le support 110 peut alors monter vers sa position haute (en trait interrompu sur la figure 1) dans laquelle ses parties de support sont en regard des extrémités arrière des rails supérieurs 88 et 88'. La plaquette portée par ce support 110 peut alors être poussée vers l'avant sur la table d'entrée 50 par la tête du vérin 54.

Il convient de noter que la tête du vérin 108 passe entre les deux parties de support du support 110 pour que ses cliquets viennent saisir la plaquette 46H par ses perçages.

Dans l'exemple représenté schématiquement, les ascenseurs 102 et 108 sont portés par les parties mobiles de vérins 104 et 112. D'autres systèmes peuvent bien entendu être envisagés pour déplacer ces ascenseurs verticalement. Ils peuvent par exemple être tous deux liés à un même arbre horizontal par un système de bielles qui, lors de la rotation de cet arbre, déplacent simultanément les deux ascenseurs, en phase ou en opposition de phase.

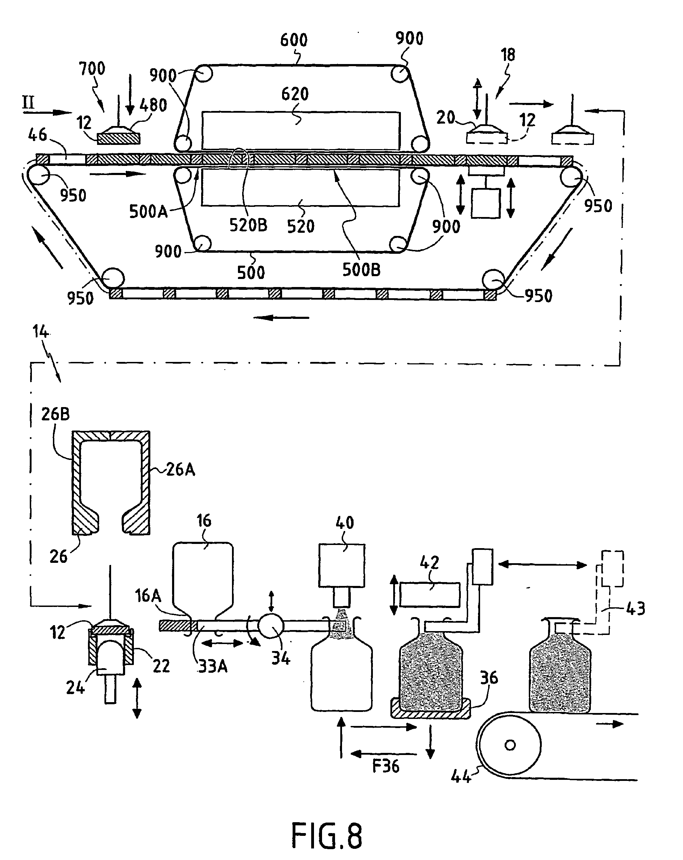

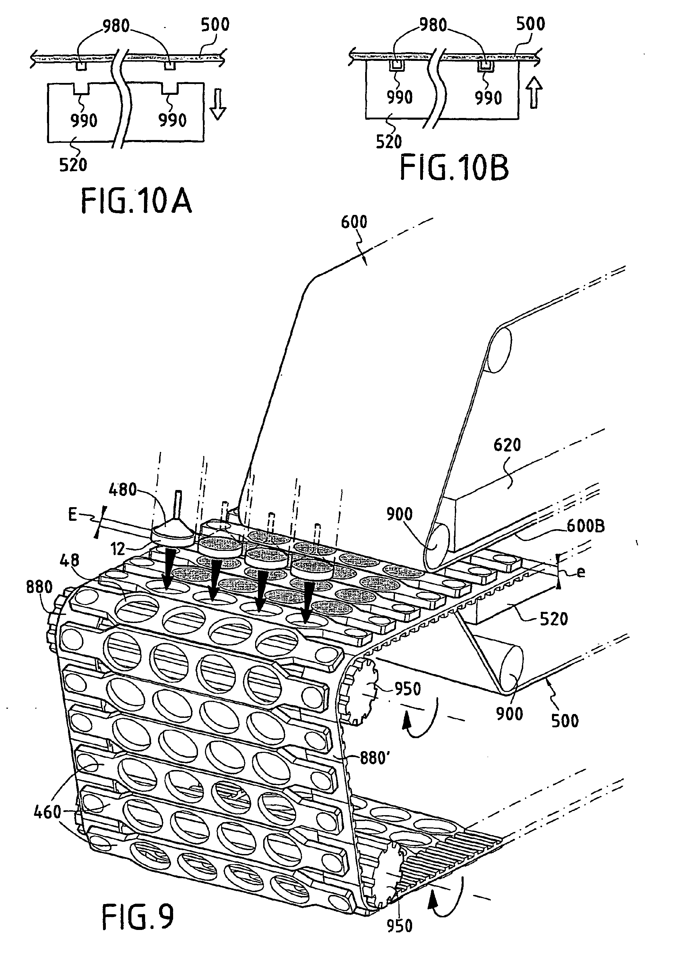

Selon un second mode de réalisation représenté sur les figures 8 et 9, l'installation comporte un tapis inférieur 500 en matériau conducteur de chaleur. Comme le montre la figure 8, il s'agit d'un tapis roulant formé d'une bande tournant selon une boucle dont le chemin supérieur traverse la station de chauffage. Sa surface utile, c'est-à-dire la surface supérieure d'entraînement 500B est sensiblement dans le plan de la surface inférieure des éléments de transport 460.

Ainsi, les pastilles sont supportées dans la station de chauffage 10 par la surface supérieure 500B du tapis roulant inférieur 500. Un moteur pas-à-pas (non représenté ici) permet de faire avancer le tapis en synchronisme avec les éléments de transport, c'est-à-dire que le tapis accompagne les pastilles en avançant en pas-à-pas avec celles-ci de manière à ce qu'il n'y ait pas de mouvement relatif entre les pastilles et la surface supérieure du tapis. On comprend donc que le tapis inférieur 500 constitue un support mobile pour les pastilles 12 lorsque celles-ci traversent la station de chauffage 10.

Le système de chauffage de l'installation comporte en outre des moyens de chauffage inférieurs 520 et des moyens pour transmettre au tapis roulant inférieur 500 la chaleur générée par les moyens de chauffage inférieurs. Ainsi, le tapis roulant inférieur transmet aux pastilles qui traversent la station de chauffage la chaleur générée par les moyens de chauffage inférieurs (ces derniers sont par exemple formés par une plaque métallique classique qui contient des résistances chauffantes). Cette plaque inférieure 520 est située dans la station de chauffage en dessous de la surface d'entraînement du tapis roulant inférieur 500 de manière à ce que la surface supérieure 520B de la plaque inférieure de chauffe soit en contact thermique avec la surface inférieure 500A du tapis roulant 500.

Lors du fonctionnement de la station de chauffage, la chaleur produite par la plaque de chauffe inférieure 520 est donc transmise par contact thermique tout d'abord au tapis 500, puis de ce tapis vers les pastilles 12.

Pour ce faire, le tapis 500 est constitué d'un matériau conducteur de la chaleur et présente une épaisseur relativement faible, par exemple de l'ordre de 2 à 10 dixièmes de millimètres. On comprend donc que le matériau composant le tapis doit posséder de très bonnes propriétés physiques : la résistance à la traction et à la déformation thermique et une très bonne conductivité thermique tout en étant non-adhésif. Pour satisfaire à ces exigences, on utilise une matière composite éventuellement renforcée.

L'installation comporte avantageusement un tapis supérieur 600 situé au dessus du tapis inférieur 500 et circulant dans la station de chauffage, par le chemin inférieur de la boucle qu'il forme. Ce tapis roulant est positionné de telle manière que sa surface inférieure 600A d'entraînement est parallèle à la surface supérieure des pastilles se trouvant dans la station de chauffage 10.

Concernant sa structure, le tapis roulant 600 peut être identique au tapis 500.

La surface inférieure du tapis 600 est apte à être en contact avec la surface supérieure des pastilles 12 qui traversent la station de chauffage 10. En fonctionnement normal, la surface inférieure 600A du tapis supérieur presse légèrement la surface supérieure des pastilles 12 de manière à ce qu'il n'y ait pratiquement pas d'interstices entre la surface du tapis et la surface supérieure des pastilles.

Dans l'exemple représenté, les moyens de chauffage comportent une plaque supérieure de chauffe 620 placée de telle manière que la surface inférieure 620A de cette plaque soit en contact sensiblement sans interstice avec la surface supérieure 600B du tapis roulant supérieur. Ce contact permet d'assurer la conduction thermique entre la plaque de chauffe et le tapis. Par suite, la chaleur sera transmise du tapis roulant vers la surface supérieure des pastilles qui seront donc chauffées à partir de leur surface supérieure.
En outre, le tapis roulant supérieur est entraîné en synchronisme avec les éléments de transport tout comme le tapis roulant inférieur. Cet entraînement est assuré grâce à un moteur pas-à-pas non représenté sur les figures.

On comprend donc que les deux tapis roulants décrits ci-dessus ont une double fonction : accompagner les pastilles dans la station de chauffage en les maintenant et chauffer lesdites pastilles.

Nous allons maintenant décrire le parcours des pastilles dans la station de chauffage.

En amont de la station de chauffage 10, l'installation comprend des moyens 700 pour déposer les pastilles dans les emplacements de cellules délimitées par des éléments de transport 460. Ces moyens se présentent sous la forme d'un mécanisme de préhension équipé d'une ventouse 480 qui prend une pastille dans un stock d'attente et vient la placer dans une cellule 48 d'un élément de transport 460 lorsque celui-ci se trouve sur un support d'entrée (non représenté sur la figure 9) tel qu'une table d'entrée disposée entre les courroies crantées décrites ci-après, à l'amont du tapis 500 ou une portion de tapis 500 qui s'étendrait en amont du tapis 600 . En l'espèce, chaque élément de transport est une plaquette 460 possédant une ou plusieurs cellules, chacune destinée à recevoir une pastille 12. Cette opération de dépose de pastilles est réalisée lors d'une phase d'arrêt de l'entraînement et en pratique, on dépose quasiment simultanément une pastille dans chaque cellule 48 de la plaquette à charger.

La plaquette chargée est ensuite entraînée pas-à-pas vers la station de chauffage 10 par l'intermédiaire de deux courroies 880,880' fixées aux extrémités latérales des plaquettes 460 et tournant en boucle fermée. Il s'agit par exemple de courroies crantées entraînées par des pignons 950 appropriés. Cela est bien représenté sur la figure 9 qui montre la zone amont de dépose de l'installation lors d'une phase d'arrêt.

Avantageusement, les plaquettes de transport 460 présentent une épaisseur (e) tout au plus sensiblement égale à l'épaisseur (E) que présentent les pastilles avant leur thermoformage, voire de préférence, légèrement inférieur à cette épaisseur (E). Ainsi, lorsqu'une plaquette de transport 460 contentant des pastilles 12 arrive à l'entrée de la station de chauffage 10, les surfaces inférieures et supérieures des pastilles sont progressivement et simultanément pressées entre le tapis inférieur et le tapis supérieur. En pratique, ce sont les plaques de chauffe qui dans leur position en fonctionnement pressent verticalement les pastilles par l'intermédiaire des tapis. Il est en effet prévu des moyens, par exemple des vérins (non représentés ici), permettant de déplacer verticalement les plaques de chauffe.

D'autre part, si les moyens de chauffage sont formés par plusieurs éléments espacés (plusieurs plaques de chauffe), des parties presseuses repoussant les tapis sur les plaquettes peuvent être disposées entre ces éléments. Il peut cependant suffire que les rouleaux de détour 900 des tapis, en particulier ceux qui sont situés à l'aval de la station de chauffage, opèrent une telle pression.

Les pastilles sont chauffées par l'intermédiaire des tapis pendant leur parcours dans la station de chauffage. L'action simultanée de la chaleur et de la pression exercée par les tapis font que les pastilles sont quasiment « rivetées » dans leurs cellules..

Lors de l'arrêt de la machine, les plaques de chauffe 520,620 peuvent être déplacées verticalement pour s'éloigner des tapis afin d'éviter un surchauffage des pastilles. Des tiges de support 980 sont disposées sous le tapis inférieur 500 afin de le maintenir sensiblement horizontal lorsque la plaque de chauffe inférieure 520 est en position basse comme sur la figure 10a. La plaque de chauffe inférieure comporte, sur la face supérieure, des rainures 990 pouvant loger les tiges 980 lorsque la plaque de chauffe inférieure 520 est en position haute comme sur la figure 10b. Il est préférable que ces tiges 980 soient relativement fines de manière à éviter de créer des zones non chauffées sur le tapis roulant 500. Elles sont par exemple disposées longitudinalement sous les zones des plaquettes situées entre les cellules.

En sortie de la station de chauffage, les tapis inférieur et supérieur arrivent sur leurs rouleaux de détour 900 avant que les courroies qui entraînent les plaquettes n'arrivent sur leurs pignons de retour 950.

Ainsi, les pastilles chaudes contenues dans la plaquette de transport qui arrive en bout des tapis roulants vont être simultanément « pelées », c'est-à-dire que le contact entre la surface du tapis inférieur (respectivement supérieur) et la surface inférieure (respectivement supérieure) des pastilles est rompu.

Les propriétés anti-adhésives du matériau constituant les tapis permettent un pelage sans abîmer ou déformer les pastilles chaudes.

De plus le rivetage des pastilles dans les cellules des plaquettes évoquées plus haut permet de faire en sorte que les pastilles soient portées par les plaquettes dans la zone située entre la station de chauffage et la zone d'éjection.

Les moyens de transfert 18 sont analogues à ceux de la figure 1 et se trouvent en position aval d'éjection comme on le voit sur la figure 8.

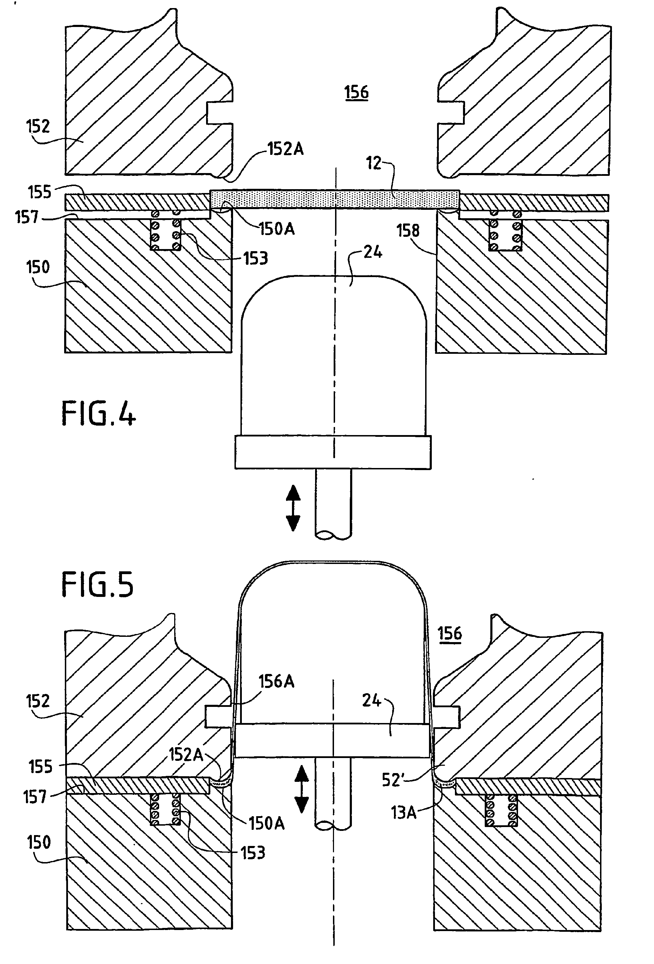

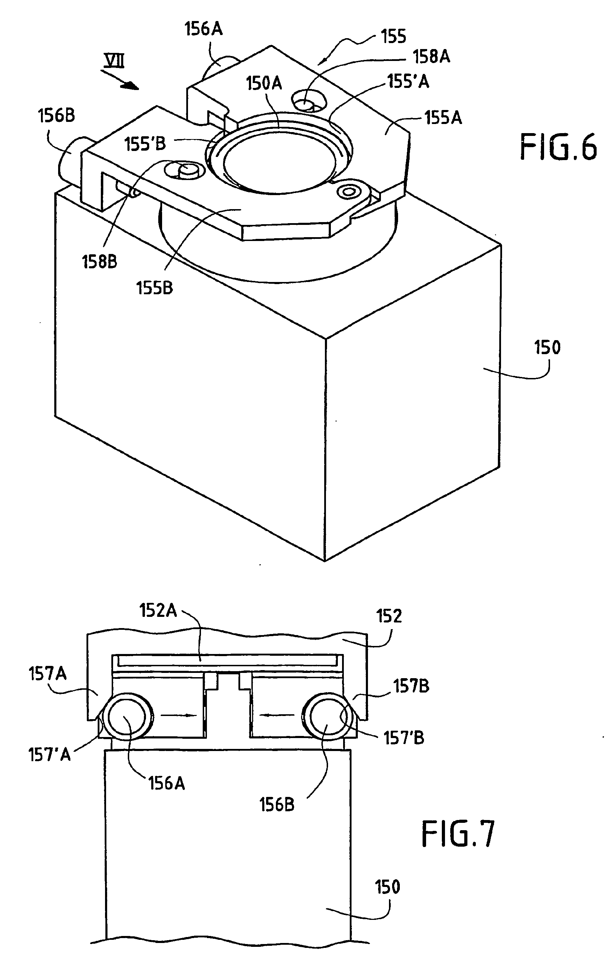

Avantageusement, l'installation comprend un dispositif conformateur, disposé en aval de la station de chauffage et apte à coopérer avec la périphérie des pastilles 12 avant leur thermoformage. Comme on le comprend en considérant les figures 4 à 7, ce dispositif conformateur comprend un bord de support 150A et une pince de conformation 155 dont les deux bras, respectivement 155A et 155B sont aptes à être ouverts (figure 6) lors de la mise en place d'une pastille 12 sur le bord de support 150A et à être refermés pour délimiter entre eux un contour de conformation pour la pastille.

Plus précisément, le bord de support 150A forme un bord de matriçage d'une matrice 150. En l'espèce, cette matrice 150 délimite en son intérieur un cylindre 158 dans lequel peut se déplacer verticalement le piston 24 de thermoformage. La matrice est donc directement formée par le contre-moule de thermoformage.

Avant le matriçage, la plaquette 12 est maintenue sur le bord de matriçage 150A en étant calée dans le contour de conformation délimité entre les bras 155A et 155B de la pince de conformation 155. Il peut arriver que la pastille soit légèrement déformée à la suite de son transport dans la station de chauffage, et l'ouverture de ces bras représentée sur la figure 6 favorise la mise en place de cette pastille à l'intérieur de l'ouverture de conformation, malgré une éventuelle déformation. La pince de conformation est montée sur la matrice 150 sur des ressorts 153. A l'état libre, le poinçon de matriçage étant écarté de la matrice, la pince de conformation se trouve dans sa position haute. Comme le montre la comparaison des figures 4 et 5, le poinçon de matriçage 152 peut être déplacé vers le bas pour coopérer avec le bord de matriçage 150A de manière à matricer la région périphérique 13A de la pastille 12 alors que cette région périphérique est emprisonnée dans le dispositif conformateur. En effet, le contour de la pastille est emprisonné par le contour de conformation défini par les bras de la pince 155A et 155B. Sous l'effet du déplacement vers le bas du poinçon 152, la pince de conformation 155A est également repoussée vers le bas contre le bord supérieur 157 du renfoncement de la matrice 150 dans lequel cette pince est disposée. Le renfoncement est défini comme étant en retrait par rapport au bord de matriçage 150A.

On voit sur les figures 6 et 7 que les deux bras 155A et 155B de la pince portent chacun un galet de came, respectivement 156A et 156B. Le poinçon 152, qui est en l'espèce défini par l'extrémité inférieure de la chambre de thermoformage, porte quant à lui des doigts, respectivement 157A et 157B, qui sont embarqués sur ce poinçon et qui coopèrent avec ces galets de came par leurs rampes, respectivement 157'A et 157'B pour refermer les bras de la pince juste avant que ne commence le matriçage proprement dit. Les bras 155A et 155B sont constamment rappelés dans leur position écartée par des moyens élastiques non représentés, cette position étant limitée par des butées, respectivement 158A et 158B.

Sur les figures 6 et 7, le dispositif conformateur est disposé dans la station de thermoformage, ce qui correspond à un mode de réalisation préférentiel. Dans la mesure où les récipients sont thermoformés vers le haut, la matrice de thermoformage est formée par la partie supérieure du contre-moule, tandis que le poinçon est formé par la partie inférieure du moule. Bien entendu, si les récipients étaient thermoformés vers le bas, une disposition contraire serait adoptée, la matrice et le poinçon étant respectivement formés par le bord supérieur du moule et par le bord inférieur du contre-moule. Dans ce cas, la pince de conformation 155 serait portée par le moule.

## Revendications

1. Installation pour fabriquer des objets tels que des récipients par thermoformage à partir de pastilles (12) de matériau thermoplastique, comprenant des moyens de transport (54, 88, 88',880,880') des pastilles au travers des différentes stations de l'installation, ces stations comprenant une station de chauffage (10) desdites pastilles qui comporte des moyens de chauffage inférieurs (52, 52',520) et des moyens de chauffage supérieurs (62, 62',620), et une station de thermoformage (14) pour déformer plastiquement par étirement les pastilles chauffées,
**caractérisée en ce que** les moyens de transport comprennent des éléments de transport (46,460) délimitant des cellules (48) qui sont ouvertes vers le haut et vers le bas et qui sont chacune aptes à contenir une pastille (12) en dégageant l'intégralité des faces supérieure et inférieure de la pastille, des moyens pour disposer les pastilles dans les cellules (54, 50,500), des moyens d'entraînement (54, 88, 88', 880, 880', 94) pour entraîner les éléments de transport dans la station de chauffage entre les moyens de chauffage inférieurs (52, 52', 520) et les moyens de chauffage supérieurs (62, 62',620) et des moyens pour transférer les pastilles chauffées (20) dans la station de thermoformage et **en ce que** les moyens de chauffage inférieurs (52, 52',520) coopèrent avec un support pour les pastilles lorsque les éléments de transport sont entraînés dans la station de chauffage.

2. Installation selon la revendication 1, **caractérisée en ce que** les moyens de chauffage inférieurs comprennent une plaque de chauffe inférieure (52,52') et **en ce que** cette plaque constitue un support pour les pastilles (12) lorsque les éléments de transport (46) sont entraînés dans la station de chauffage.

3. Installation selon la revendication 2, **caractérisée en ce qu'**elle comporte une plaque de support froide (56, 56'), qui est disposée sur un côté de la plaque de chauffe inférieure (52, 52'), et dont la surface (56A, 56'A) s'étend dans un même plan horizontal que la surface de ladite plaque de chauffe (52A, 52'A) et **en ce que** la plaque de chauffe inférieure et la plaque de support froide sont mobiles latéralement entre une première position dans laquelle la plaque de chauffe Inférieure est apte à supporter les pastilles et une deuxième position dans laquelle la plaque de support froide (56, 56') est apte à supporter les pastilles.

4. Installation selon la revendication 3, **caractérisée en ce qu'**elle comporte une plaque supérieure froide (66, 66'), qui est disposée au-dessus de la plaque de support froide (56, 56') et **en ce que** cette plaque supérieure froide, ainsi que les moyens de chauffage supérieurs (62, 62'), sont mobiles latéralement entre une première position dans laquelle les moyens de chauffage supérieurs sont situés au-dessus des pastilles et une deuxième position dans laquelle la plaque supérieure froide est située au-dessus des pastilles.

5. Installation selon l'une quelconque des revendications 1 à 4, **caractérisée en ce que** les moyens de chauffage supérieurs comprennent une plaque de chauffe supérieure (62,62') présentant une surface inférieure (62A,62'A) apte à être en contact avec les faces supérieures des pastilles (12).

6. Installation selon la revendication 1, **caractérisée en ce qu'**elle comporte un tapis inférieur (500) en matériau conducteur de chaleur, des moyens pour transmettre à ce tapis la chaleur générée par les moyens de chauffage inférieurs, **en ce que** le tapis inférieur constitue le support pour les pastilles qui reposent sur la surface supérieure de ce tapis (500B), et **en ce que** le tapis inférieur est entraîné dans la station de chauffage en synchronisme avec les éléments de transport (460).

7. Installation selon la revendication 6, **caractérisée en ce que** les moyens de chauffage inférieurs comportent une plaque de chauffe inférieure (520), **en ce que** ladite plaque inférieure présente une surface supérieure (520B) en contact thermique avec la surface inférieure du tapis (500A), et **en ce que** le tapis inférieur constitue le support pour les pastilles qui reposent sur la surface supérieure de ce tapis (500B).

8. Installation selon l'une quelconque des revendications 6 ou 7, **caractérisée en ce qu'**elle comporte un tapis supérieur (600) en matériau conducteur de chaleur, des moyens pour transmettre à ce tapis la chaleur générée par les moyens de chauffage supérieurs, **en ce que** la surface inférieure (600A) dudit tapis est apte à être en contact avec les faces supérieures des pastilles et **en ce que** le tapis supérieur est entraîné dans la station de chauffage en synchronisme avec les éléments de transport.

9. Installation selon la revendication 8, **caractérisée en ce que** les moyens de chauffage supérieurs comprennent une plaque de chauffe supérieure (620), **en ce que** ladite plaque supérieure présente une surface inférieure (620A) en contact thermique avec la surface supérieure dudit tapis (600B).

10. Installation selon l'une quelconque des revendications 1 à 9, **caractérisée en ce que** les éléments de transport sont formés par des plaquettes de transport (46,460) présentant une épaisseur (e) tout au plus sensiblement égale à l'épaisseur (E) que présentent les pastilles avant leur thermoformage.

11. Installation selon les revendications 6, 8 et 10, **caractérisée en ce qu'**elle comporte en outre des moyens pour presser les pastilles (12) par l'intermédiaire des tapis (500,600).

12. Installation selon la revendication 11, **caractérisé en ce que** les plaques de chauffe (520,620) pressent les pastilles (12) par l'intermédiaire des tapis (500,600).

13. Installation selon la revendication 6 et l'une quelconque des revendications 1 à 12, **caractérisé en ce qu'**elle comprend des tiges de support (980) du tapis inférieur (500), disposées sous ce dernier.

14. installation selon la revendication 13, **caractérisée en ce que** les moyens de chauffage inférieurs comprennent une plaque de chauffe inférieure (520) qui présente, sur sa face supérieure, des rainures (990) aptes à loger les tiges de support (980).

15. Installation selon l'une quelconque des revendications 1 à 14, **caractérisée en ce que** les éléments de transport sont formés par des plaquettes de transport (46), **en ce que** chaque cellule (48) est délimitée entre une plaquette de transport amont (46A) et une plaquette de transport aval (46B) disposées l'une à la suite de l'autre dans le sens de transport des pastilles.

16. Installation selon la revendication 15, **caractérisée en ce que** le contour de chaque plaquette de transport (46) présente un bord concave aval (48A) et un bord concave amont (48B) alignés selon le sens de transport (F) des pastilles (12), le bord concave aval d'une première plaquette étant apte à définir une cellule (48) avec le bord concave amont d'une deuxième plaquette disposée en aval de ladite première plaquette.

17. Installation selon la revendication 16, **caractérisée en ce qu'**elle comprend des moyens pour disposer les pastilles (12) selon une pile sur une table d'entrée (50) dont la surface (50A) s'étend dans un même plan horizontal qu'une surface (52A, 52'A) supérieure du support pour les pastilles (52, 52'), **en ce que** les moyens de transport comprennent des moyens (110, 112, 108) pour amener une plaquette de transport (46C) sur la table d'entrée dans une position d'attente et **en ce que** la position d'attente est une position dans laquelle le bord concave aval (48A) de cette plaquette se trouve en regard de la pile et des moyens (54) pour déplacer ladite plaquette vers l'aval de telle sorte que ce bord concave coopère avec la pastille inférieure de la pile pour entraîner cette pastille vers l'aval, au moins jusqu'à ce que ladite plaquette parvienne dans une position intermédiaire (46D) dans laquelle le bord concave amont (48B) de ladite plaquette se trouve devant la pile.

18. Installation selon la revendication 17, **caractérisée en ce que** les moyens d'entraînement (54) comprennent un organe d'entraînement se déplaçant en va-et-vient entre une première position dans laquelle il est apte à coopérer avec une plaquette en position d'attente (46C) et une deuxième position dans laquelle il place ladite plaquette dans sa position intermédiaire (46D) et **en ce que**, lorsqu'une plaquette atteint sa position intermédiaire, elle pousse vers l'aval les plaquettes disposées devant elle.

19. Installation selon l'une quelconque des revendications 1 à 16, **caractérisée en ce qu'**elle comprend des moyens pour déposer les pastilles (700) dans les emplacements de cellules délimitées par des éléments de transport (46,460), sur la surface supérieure d'un support d'entrée (50,500), lors d'une phase d'arrêt, dans une région amont de la station de chauffage.

20. Installation selon l'une quelconque des revendications 1 à 19, **caractérisée en ce qu'**elle comporte des rails (88,88') aptes à supporter les plaquettes en maintenant ces dernières hors de contact avec les plaques de chauffe (52, 52', 62, 62').

21. Installation selon la revendication 10 et l'une quelconque des revendications 1 à 19, **caractérisée en ce qu'**elle comporte des courroies (880,880') auxquelles sont fixées les extrémités latérales des plaquettes et qui entraînent les plaquettes dans la station de chauffage.

22. Installation selon l'une des revendications 1 à 21, **caractérisé en ce que** les moyens pour transférer les pastilles chauffées dans la station de thermoformage comprennent un organe de préhension (20), disposé en aval de la station de chauffage (10) et apte à saisir une pastille (12) se trouvant dans une cellule.

23. Installation selon les revendications 15 et 22, **caractérisé en ce que** la pastille saisie se situe entre une plaquette de transport aval (46F) et une plaquette de transport amont (46G) et **en ce qu'**elle comporte des moyens pour écarter la plaquette de transport aval de la plaquette de transport amont avant que ledit organe ne saisisse la pastille.

24. Installation selon l'une quelconque des revendications 1 à 23, **caractérisée en ce qu'**elle comprend un dispositif conformateur (155, 150A, 152A), disposé en aval de la station de chauffage et apte à coopérer avec la périphérie des pastilles (12) avant leur thermoformage.

25. Installation selon la revendication 24, **caractérisée en ce que** le dispositif conformateur comprend un bord de support (150A) et une pince de conformation (155) ayant deux bras (155A, 155B) aptes à être ouverts lors de la mise en place d'une pastille sur le bord de support et à être refermés pour délimiter entre eux un contour de conformation (155'A, 155'B) pour la pastille.

26. Installation selon la revendication 25, **caractérisée en ce que** le bord de support forme un bord de matriçage (150A) et **en ce que** le dispositif conformateur comprend un poinçon de matriçage (152A) apte à coopérer avec le bord de matriçage pour matricer la région périphérique d'une plaquette alors que ladite région périphérique est emprisonnée dans le dispositif conformateur.

27. Installation selon l'une quelconque des revendications 24 à 26, **caractérisée en ce que** le dispositif conformateur (150A, 152A, 155) est disposé dans la station de thermoformage.

## Claims

1. An installation for manufacturing objects such as receptacles by thermoforming pellets (12) of thermoplastic material, said installation including conveyor means (54, 88, 88', 880, 880') for conveying the pellets through the various stations in the installation, said stations including a heating station (10) for heating said pellets, which station includes bottom heater means (52, 52', 520) and top heater means (62, 62', 620), and a thermoforming station (14) for plastically deforming the heated pellets by stretching them;
said installation being **characterised in that** the conveyor means comprise conveyor elements (46, 460) defining cells (48) which are open upwards and downwards, and each of which is suitable for containing one pellet (12) while the entire top and bottom faces of the pellet remain unobstructed, means for depositing the pellets in the cells (54, 50, 500), drive means (54, 88, 88', 880, 880', 94) for driving the conveyor elements through the heating station between the bottom heater means (52, 52', 520) and the top heater means (62, 62', 620), and transfer means (20) for transferring the heated pellets to the thermoforming station, and **in that** the bottom heater means (52, 52', 520) co-operate with a support for the pellets while said conveyor elements are being driven through the heating station.

2. An installation according to claim 1, **characterised in that** the bottom heater means comprise a bottom heater plate (52, 52'), and **in that** said plate constitutes a support for the pellets (12) while the conveyor elements (46) are being driven through the heating station.

3. An installation according to claim 2, **characterised in that** it includes a cold support plate (56, 56') which is disposed on one side of the bottom heater plate (52, 52'), and whose surface (56A, 56'A) extends in the same horizontal plane as the surface of said heater plate (52A, 52'A), and **in that** the bottom heater plate and the cold support plate are mounted to move sideways between a first position in which the bottom heater plate is suitable for supporting the pellets and a second position in which the cold support plate (56, 56') is suitable for supporting the pellets.

4. An installation according to claim 3, **characterised in that** it includes a cold top plate (66, 66') which is disposed above the cold support plate (56, 56'), and **in that** said cold top plate, and the top heater means (62, 62') are mounted to move sideways between a first position in which the top heater means are situated above the pellets and a second position in which the cold top plate is situated above the pellets.

5. An installation according to any one of claims 1 to 4, **characterised in that** the top heater means comprise a top heater plate (62, 62') that presents a bottom surface (62A, 62'A) suitable for being in contact with the top faces of the pellets (12).

6. An installation according to claim 1, **characterised in that** it includes a bottom belt (500) made of a heat-conducting material, and means for transmitting the heat generated by the bottom heater means to said belt, **in that** the bottom belt constitutes the support for the pellets which rest on the top surface of said belt (500B), and **in that** the bottom belt is driven through the heating station in a manner synchronized with the conveyor elements (460).

7. An installation according to claim 6, **characterised in that** the bottom heater means comprise a bottom heater plate (520), **in that** said bottom plate presents a top surface (520B) in thermal contact with the bottom surface of the belt (500A), and **in that** the bottom belt constitutes the support for the pellets which rest on the top surface of said belt (500B).

8. An installation according to claim 6 or claim 7, **characterised in that** it includes a top belt (600) made of a heat-conducting material, and means for transmitting the heat generated by the top heater means to said belt, **in that** the bottom surface (600A) of said belt is suitable for being in contact with the top faces of the pellets, and **in that** the top belt is driven through the heating station in a manner such that it is synchronized with the conveyor elements.

9. An installation according to claim 8, **characterised in that** the top heater means comprise a top heater plate (620), and **in that** said top plate presents a bottom surface (620A) in thermal contact with the top surface of said belt (600B).

10. An installation according to any one of claims 1 to 9, **characterised in that** the conveyor elements are constituted by conveyor slats (46, 460) presenting a thickness (e) at the most substantially equal to the thickness (E) presented by the pellets before they are thermoformed.

11. An installation according to claims 6, 8, and 10, **characterised in that** it further includes means for pressing the pellets (12) via the belts (500, 600).

12. An installation according to claim 11, **characterised in that** the heater plates (520, 620) press the pellets (12) via the belts (500, 600).

13. An installation according to claim 6 and any one of claims 1 to 12, **characterised in that** it includes support rods (980) for supporting the bottom belt (500), which rods are disposed under said bottom belt.

14. An installation according to claim 13, **characterised in that** the bottom heater means comprise a bottom heater plate (520) which, in its top face, is provided with grooves (990) suitable for receiving the support rods (980).

15. An installation according to any one of claims 1 to 14, **characterised in that** the conveyor elements are constituted by conveyor slats (46), **in that** each cell (48) is defined between an upstream conveyor slat (46A) and a downstream conveyor slat (46A) disposed in succession in the direction in which the pellets are conveyed.

16. An installation according to claim 15, **characterised in that** the outline of each conveyor slat (46) is provided with a downstream concave edge (48A) and with an upstream concave edge (48B) that are mutually aligned in the conveying direction (F) in which the pellets (12) are conveyed, the downstream concave edge of a first slat being suitable for defining a cell (48) with the upstream concave edge of a second slat disposed downstream from said first slat.

17. An installation according to claim 16, **characterised in that** it includes means for disposing the pellets (12) in a stack on an inlet table (50) whose surface (50A) extends in the same horizontal plane as a top surface (52A, 52'A) of the support for the pellets (52, 52'), **in that** the conveyor means include means (110, 112, 108) for bringing a conveyor slat (46C) onto the inlet table in a waiting position, and **in that** the waiting position is a position in which the downstream concave edge (48A) of said slat is situated facing the stack, and drive means (54) for moving said slat downstream so that said concave edge co-operates with the bottom pellet in the stack to drive said pellet downstream, at least until said slat comes into an intermediate position (46D) in which the upstream concave edge (48B) of said slat is situated in front of the stack.

18. An installation according to claim 17, **characterised in that** the drive means (54) comprise a drive member that moves in reciprocating manner between a first position in which it is suitable for co-operating with a slat in the waiting position (46C) and a second position in which it places said slat in its intermediate position (46D), and **in that**, when a slat reaches its intermediate position, it pushes the slats disposed in front of it downstream.

19. An installation according to any one of claims 1 to 16, **characterised in that** it comprises means for depositing pellets (700) in the locations of cells defined by conveyor elements (46, 460) on the top surface of an inlet support (50, 500), during a stop stage, in an upstream region of the heating station.

20. An installation according to any one of claims 1 to 19, **characterised in that** it includes rails (88, 88') suitable for supporting the slats by holding them out of contact with the heater plates (52, 52', 62, 62').

21. An installation according to claim 10, and to any one of claims 1 to 19, **characterised in that** it includes belts (880, 880') to which the side ends of the slats are fixed, and which drive the slats through the heating station.

22. An installation according to one of claims 1 to 21, **characterised in that** the means for transferring the heated pellets to the thermoforming station comprise a pick-up member (20), disposed downstream from the heating station (10) and suitable for picking up a pellet (12) that is situated in a cell.

23. An installation according to claims 15 and 22, **characterised in that** the pellet that is picked up is situated between a downstream conveyor slat (46F) and an upstream conveyor slat (46G), and **in that** said installation includes means for moving the downstream conveyor slat away from the upstream conveyor slat before said member picks up the pellet.

24. An installation according to any one of claims 1 to 23, **characterised in that** it includes a shaping device (155, 150A 152A) disposed downstream from the heating station and suitable for co-operating with the peripheries of the pellets (12) before they are thermoformed.

25. An installation according to claim 24, **characterised in that** the shaping device comprises a support edge (150A) and a shaping clamp (155) having two arms (155A, 155B) suitable for being opened when a pellet is put in place on the support edge, and for being closed again to define between them a shaping outline (155'A, 155'B) for the pellet.

26. An installation according to claim 25, **characterised in that** the support edge forms a die-stamping edge (150A), and **in that** the shaping device comprises a die stamp (152A) suitable for co-operating with the die-stamping edge for die-stamping the peripheral region of a pellet while said peripheral region is held captive in the shaping device.

27. An installation according to any one of claims 24 to 26, **characterised in that** the shaping device (150A, 152A, 155) is disposed in the thermoforming station.

## Patentansprüche

1. Anlage zur Herstellung von Gegenständen wie Behältern durch Wärmeformung aus Pastillen (12) von thermoplastischem Material, umfassend Transportmittel (54, 88, 88', 880, 880') der Pastillen über verschiedene Stationen der Anlage, wobei diese Stationen eine Heizstation (10) der Pastillen, die untere Heizmittel (52, 52', 520) und obere Heizmittel (62, 62', 620) umfaßt, und eine Wärmeformungsstation (14) zum plastischen Verformen durch Ausziehen der erwärmten Pastillen umfassen,
**dadurch gekennzeichnet, daß** die Transportmittel Transportelemente (46, 460), die Zellen (48) begrenzen, welche nach oben und zum Boden offen sind und die jede geeignet sind, eine Pastille (12) zu enthalten unter Freisetzen der vollständigen oberen und unteren Seiten der Pastille, Mittel zum Anordnen der Pastillen in den Zellen (54, 50, 500) und Antriebsmittel (54, 88, 88', 880, 880', 94), um die Transportelemente in der Heizstation zwischen den unteren Heizmitteln (52, 52', 520) und den oberen Heizmitteln (62, 62', 620) anzutreiben, und Mittel (20) umfassen, um die in der Wärmeformungsstation erwärmten Pastillen zu überführen,
und **dadurch**, daß die unteren Heizmittel (52, 52', 520) mit einem Träger für die Pastillen zusammenwirken, wenn die Transportelemente in der Heizstation angetrieben werden.

2. Anlage nach Anspruch 1, **dadurch gekennzeichnet, daß** die unteren Heizmittel eine untere Heizplatte (52, 52') umfassen und daß die Heizplatte einen Träger für die Pastillen (12) bildet, wenn die Transportelemente (46) in der Heizstation angetrieben werden.

3. Anlage nach Anspruch 2, **dadurch gekennzeichnet, daß** sie eine kalte Trägerplatte (56, 56') umfaßt, die auf einer Seite der unteren Heizplatte (52, 52') angeordnet ist, und deren Oberfläche (56A, 56'A) sich in einer selben Horizontalebene wie die Oberfläche der Heizplatte (52A, 52'A) erstreckt und daß die untere Heizplatte und die kalte Trägerplatte seitlich zwischen einer ersten Position, in der die Unterheizplatte geeignet ist, die Pastillen zu tragen, und einer zweiten Position, in der die kalte Platte (56, 56') geeignet ist, die Pastillen zu tragen, beweglich sind.

4. Anlage nach Anspruch 3, **dadurch gekennzeichnet, daß** sie eine obere kalte Platte (66, 66') umfaßt, die über der kalten Trägerplatte (56, 56') angeordnet ist, und **dadurch**, daß diese obere kalte Platte sowie die oberen Heizmittel (62, 62') seitlich zwischen einer ersten Position, in der die oberen Heizmittel über den Pastillen angeordnet sind, und einer zweiten Position, in der die obere kalte Platte über den Pastillen angeordnet ist, beweglich sind.

5. Anlage nach einem der Ansprüche 1 bis 4, **dadurch gekennzeichnet, daß** die oberen Heizmittel eine obere Heizplatte (62, 62') umfassen, die eine untere Oberfläche (62A, 62'A) aufweist, die geeignet ist, in Kontakt mit den Oberseiten der Pastillen (12) zu sein.

6. Anlage nach Anspruch 1, **dadurch gekennzeichnet, daß** sie ein unteres Band (500) aus wärmeleitendem Material, Mittel zum Überführen der Hitze auf dieses Band umfaßt, die durch die unteren Heizmittel erzeugt wird, und **dadurch**, daß das untere Band den Träger für die Pastillen bildet, die auf der oberen Oberfläche dieses Bandes (500B) ruhen, und **dadurch**, daß das untere Band in der Heizstation synchron mit den Transportelementen (460) angetrieben wird.

7. Anlage nach Anspruch 6, **dadurch gekennzeichnet, daß** die unteren Heizmittel eine untere Heizplatte (520) umfassen, **dadurch**, daß die untere Platte eine obere Oberfläche (520B) in thermischem Kontakt mit der unteren Oberfläche des Bandes (500A) aufweist, und **dadurch**, daß das untere Band den Träger für die Pastillen bildet, die auf der oberen Oberfläche dieses Bandes (500B) ruhen.

8. Anlage nach einem der Ansprüche 6 oder 7, **dadurch gekennzeichnet, daß** sie ein oberes Band (500) aus wärmeleitendem Material, Mittel zum Überführen der Hitze auf dieses Band umfaßt, die durch die oberen Heizmittel erzeugt wird, **dadurch**, daß die untere Fläche (600A) des genannten Bandes geeignet ist, mit den oberen Flächen der Pastillen in Kontakt zu treten, und **dadurch**, daß das obere Band in der Heizstation synchron mit den Transportelementen angetrieben wird.

9. Vorrichtung nach Anspruch 8, **dadurch gekennzeichnet, daß** die oberen Heizmittel eine obere Heizplatte (620) umfassen, daß die obere Heizplatte eine untere Oberfläche (620A) in thermischen Kontakt mit der oberen Oberfläche des Bandes (600B) aufweist.

10. Anlage nach einem der Ansprüche 1 bis 9, **dadurch gekennzeichnet, daß** die Transportelemente durch Transportplatten (46, 460) gebildet sind, die höchstens eine Dicke (e) aufweisen, die im Wesentlichen gleich der Dicke (E) der Pastillen vor deren Wärmeformen ist.

11. Anlage nach den Ansprüchen 6, 8 und 10, **dadurch gekennzeichnet, daß** sie außerdem Mittel umfaßt, um die Pastillen (12) mit Bändern (500, 600) zu pressen.

12. Anlage nach Anspruch 11, **dadurch gekennzeichnet, daß** die Heizplatten (520, 620) die Pastillen (12) mit den Bändern (500, 600) pressen.

13. Anlage nach Anspruch 6 und nach einem der Ansprüche 1 bis 12, **dadurch gekennzeichnet, daß** sie Trägerstangen (980) des unteren Bandes (500) umfaßt, die unter jenem letzteren angeordnet sind.

14. Anlage nach Anspruch 13, **dadurch gekennzeichnet, daß** die unteren Heizmittel eine untere Heizplatte (520) umfassen, die auf ihrer Oberseite Rillen (990) aufweist, die geeignet sind, die Trägerstangen (980) aufzunehmen.

15. Anlage nach einem der Ansprüche 1 bis 14, **dadurch gekennzeichnet, daß** die Transportelemente gebildet werden durch Transportplatten (46), **dadurch**, daß jede Zelle (48) begrenzt ist zwischen einer Transportplatte stromaufwärts (46A) und einer Transportplatte stromabwärts (46B), die, die eine nach der anderen in Transportrichtung der Pastillen angeordnet sind.

16. Anlage nach Anspruch 15, **dadurch gekennzeichnet, daß** die Kontur jeder Transportplatte (46) einen konkaven Rand stromabwärts (48A) und einen konkaven Rand stromaufwärts (48B) aufweist, die gemäß der Transportrichtung (F) der Pastillen (12) ausgerichtet sind, wobei der konkave Rand stromabwärts von einer ersten Platte geeignet ist, eine Zelle (48) mit dem konkaven Rand stromaufwärts der zweiten Platte zu bilden, die stromabwärts der ersten Platte angeordnet ist.

17. Anlage nach Anspruch 16, **dadurch gekennzeichnet, daß** sie Mittel umfaßt zum Anordnen der Pastillen (12) gemäß einem Stapel auf einem Eingangstisch (50), dessen Oberfläche (50A) sich im Wesentlichen in einer selben Horizontalebene wie einer oberer Oberfläche (52A, 52'A) des Trägers für die Pastillen (52, 52') erstreckt, **dadurch**, daß die Transportmittel Mittel (110, 112, 108) zum Zuführen einer Transportplatte (46C) auf den Eingangstisch in eine Warteposition umfassen, und **dadurch**, daß die Warteposition eine Position ist, in der der konkave Rand stromabwärts (48A) dieser Platte sich gegenüber dem Stapel befindet, und Mittel (54) zum Bewegen der Platte nach stromabwärts derart, daß der konkave Rand mit der Pastille unter dem Stapel zusammenwirkt, um diese Pastille nach stromabwärts zu ziehen, wenigstens bis die Platte in eine Zwischenposition (46D) kommt, in der der konkave Rand stromaufwärts (48B) der Platte sich vor dem Stapel befindet.

18. Anlage nach Anspruch 17, **dadurch gekennzeichnet, daß** die Antriebsmittel (54) ein Antriebsorgan umfassen, das sich hin und her zwischen einer ersten Position, in der es geeignet ist, mit einer Platte in Warteposition (46C) zusammenzuwirken, und einer zweiten Position, in der es die Platte in ihrer Zwischenposition (46D) anordnet, bewegt, und **dadurch**, daß, wenn eine Platte ihre Zwischenposition erreicht, sie nach stromabwärts die Platten schiebt, die vor ihr angeordnet sind.

19. Anlage nach einem der Ansprüche 1 bis 16, **dadurch gekennzeichnet, daß** sie Mittel zum Ablegen der Pastillen (700) an Orten von Zellen umfaßt, die durch Transportelemente (46, 460) begrenzt sind, auf der oberen Oberfläche eines Eingangsträgers (50, 500) bei einer Wartephase in einem Bereich stromaufwärts der Heizstation.

20. Anlage nach einem der Ansprüche 1 bis 19, **dadurch gekennzeichnet, daß** sie Schienen (88, 88') umfaßt, die geeignet sind, die Platten unter Halten von diesen letzteren frei von Kontakt mit den Heizplatten (52, 52', 62, 62') zu tragen.

21. Anlage nach Anspruch 10 und nach einem der Ansprüche 1 bis 19, **dadurch gekennzeichnet, daß** sie Antriebsriemen (880, 880') umfaßt, an denen die Seitenenden der Platten befestigt sind und die die Platten in der Heizstation antreiben.

22. Anlage nach einem der Ansprüche 1 bis 21, **dadurch gekennzeichnet, daß** die Mittel zum Überführen der geheizten Pastillen in die Wärmeformungsstation ein Greiforgan (20) umfassen, daß stromabwärts der Heizstation (10) angeordnet ist, und geeignet ist, eine Pastille (12), die sich in einer Zelle befindet, zu erfassen.

23. Anlage nach einem der Ansprüche 15 und 22, **dadurch gekennzeichnet, daß** die erfaßte Pastille zwischen einer Transportplatte stromabwärts (46F) und einer Transportplatte stromaufwärts (46G) liegt, und daß sie Mittel umfaßt, um die Transportplatte stromabwärts von der Transportplatte stromaufwärts zu beabstanden, bevor das Organ die Pastille erfaßt.

24. Anlage nach einem der Ansprüche 1 bis 23, **dadurch gekennzeichnet, daß** sie eine Konformationsvorrichtung (155, 150A, 152A) umfaßt, die stromabwärts der Heizstation angeordnet ist, und geeignet ist, mit dem Umfang der Pastillen (12) vor deren Wärmeverformung zusammenzuwirken.

25. Anlage nach Anspruch 24, **dadurch gekennzeichnet, daß** die Konformationsvorrichtung einen Trägerrand (150A) und eine Konformationsklammer (155) mit zwei Armen (155A, 155B) umfaßt, die geeignet sind, beim Plazieren einer Pastille auf dem Rand des Trägers geöffnet zu werden und zum Begrenzen einer Konformationskontur zwischen ihnen (155'A, 155'B) für die Pastille geschlossen zu werden.

26. Anlage nach Anspruch 25, **dadurch gekennzeichnet, daß gekennzeichnet**, daß der Trägerrand einen Matrizenrand (150A) bildet und daß die Konformationsvorrichtung eine Matrizenklammer (152A) umfaßt, die geeignet ist, mit dem Matrizenrand zusammenzuwirken, um den Umfangsbereich einer Platte einzugrenzen, während der Umfangsbereich in der Konformationsvorrichtung eingefangen ist.

27. Anlage nach einem der Ansprüche 24 bis 26, **dadurch gekennzeichnet, daß** die Konformationsvorrichtung (150A, 152A, 155) in der Wärmeformungsstation angeordnet ist.
